# EUROPEAN PATENT APPLICATION

(11) **EP 0 887 755 A2**
(43) Date of publication of application: **30.12.1998**
(21) Application number: 98111646.0
(22) Date of filing: 24.06.1998
(51) Int. Cl.: G06F 17/60

(54) **Electronic mail-capable communication terminal device and electronic mail communication method**

(30) Priority: 27.06.1997 JP 172596/97
(71) Applicant: Murata Kikai Kabushiki Kaisha, Minami-ku, Kyoto-shi, Kyoto (JP)
(72) Inventor: Eguchi, Masashi, Mukaijima Danchi 6-1-6, Kyoto-shi, Kyoto (JP)
(74) Representative: Liedl, Christine, Dipl.-Chem.

(57) **Abstract**

A communication terminal device (13) provided with electronic mail communication capabilities creates image data indicating transmission of electronic mail to a recipient, dials a facsimile number of a recipient's device, and transmits the image data to the recipient's device via facsimile. The image data is prepared either before of after electronic mail transmission. On the receiving side, the image data is output from, for example, a printer of the recipient's device. A recipient's mailbox is checked upon receiving this image data.

## Description

The present invention relates to an electronic mail-capable communication terminal device like a facsimile machine provided with the ability to access electronic mail.

In recent years, computer communication networks comprised of local computer communication networks further networked over communications lines and capable of transmitting electronic mail like the Internet have grown. Computer communication networks allow for easy error correction, and permit communication with computers not only domestically but from overseas as well on only the cost of communicating with a local provider (a service that provides connection to a computer network).

Conventional communication procedures and methods for G3 facsimile machines differ from that of computer communication networks, and therefore it is not possible to connect these facsimile machines directly to the computer communication networks. However, by converting into electronic mail format the image data of an original document to be sent, facsimile machines can be enabled to transmit image data to the computer communication networks.

When a facsimile machine provided with electronic mail communication capabilities transmits electronic mail via the Internet, it dials a telephone number of the Internet Service Provider ("ISP"), and logs-in by entering the user name and password of the registered user, and then sends mail. The host computer of the provider locates and sends the mail to an optimal gateway along the Internet in order to transmit the mail to the mail address of the recipient. The electronic mail message is passed from gateway to gateway through the Internet, and finally to the server in which the recipient's mailbox is located. The mail is then stored in the mail box at the recipient's mail address.

When the internet connection is a dial-up IP connection, the recipient accesses the network, checks its mailbox, and if retrievable mail is found, downloads the mail from the mailbox.

As described above, the recipient must access his or her mail box and download the mail in order to retrieve the mail. This means that the recipient cannot know whether there is any mail or not in its mail box without accessing the network and checking the mail (or mailbox). Consequently, the recipient has to access the mail box to check for mail at regular intervals.

Further, when the Internet is used to transmit mail, the intermediary path along which the mail is delivered (the path between the gateways) is dependent on the selection of each intermediary gateway by the previous gateway, so there is no way of knowing what route the message will take. Moreover, this delivery process may require a good deal of time, and in a worst case scenario, there is the danger that the mail will be lost. Particularly when a single original image is divided into a plurality of segments on the sending side and a plurality of electronic mails corresponding to these segments are transmitted via the Internet, there is a risk that one or more of these mails are not delivered to a destination and an image reproduced on the receiving side is incomplete.

Japanese Patent Application, Laid-Open Publication No. 9-46503 discloses a method of informing a recipient's device of a fact of facsimile data transmission by way of electronic mail. After sending facsimile data to a recipient's device, a sender's device sends to the recipient's device electronic mail indicating that the sender's device just sent the facsimile data.

Japanese Patent Application, Laid-Open Publication No. 9-116728 discloses a system for informing a sender's device of failed transmission by electronic mail if a server fails to transmit facsimile data to a recipient's device. The server acquires an electronic mail address of the sender's device from header information.

Japanese Patent Application, Laid-Open Publication No. 6-164635 discloses an electronic mail system for automatically informing a sender's device by electronic mail that a designated recipient cannot respond to the delivered electronic mail promptly.

It is an object of the present invention to provide an electronic mail-capable communication terminal device like a facsimile machine which informs an intended recipient of electronic mail transmission so that a recipient does not have to check its mailbox periodically. It is only necessary for the recipient to check the mailbox when he or she is informed of mail transmission.

Another object of the present invention is to provide an electronic mail-capable communication terminal device on a receiving side which informs the electronic mail sender of result of mail reception (e.g., successful transmission if all electronic mails are received or failed transmission if all the electronic mails are not received).

In the first embodiment of the present invention, a communication terminal device provided with electronic mail communication capabilities comprises a means for transmitting electronic mail to a desired recipient, an image generating means for generating image data indicating transmission of the electronic mail to the recipient, a dialing means for making a call to a recipient's device, and a transmission means for transmitting the image data to the recipient's device called by the dialing means by way of facsimile transmission. Either before of after electronic mail transmission, the image data indicative of mail transmission is prepared on the sending side. Then, a telephone number (facsimile number) of a recipient's device is dialed, and the image data is transmitted to the recipient's device. On the receiving side, the image data is output from, for example, a printer of the recipient's device or displayed on a screen such as LCD. The mail recipient can thus be reliably informed that mail has been transmitted. Since the recipient's mailbox will be checked upon receiving this notification, it is possible for the recipient to download the transmitted electronic mail soon after its arrival. Further, communication costs are reduced when compared to the case where a mailbox is checked on a periodic basis regardless of whether or not electronic mail has been received. Moreover, this information is image data, and so can be easily reduced or enlarged to fit onto a recording sheet.

According to the second embodiment of the present invention, there is provided an electronic mail-capable communication terminal device that receives mail transmittal notification from a sender's device together with electronic mail. In other words, this communication terminal device is used with the communication terminal device sending the electronic mail with notification about mail transmission described above. The communication terminal device on the receiving side includes a means for receiving electronic mail, a determination means for determining a fact that electronic mail that has been sent from a sender has not arrived, an image generating means for generating an image to indicate that mail has not arrived if it is the case, a dialing means which dials the telephone number (facsimile number) of the sender's device when the electronic mail that has been sent does not arrive, and a transmission means to transmit the image data to the mail sender called by the dialing means. If the notification from the sender's device shows that particular electronic mail has been sent but the communication terminal device does not receive the electronic mail, then the communication terminal device sends information about missing electronic mail to the sender's device by way of facsimile. The missing electronic mail information reaches the sender's device reliably since it is not sent through the network but through a public telephone line. In particular, the sender's device sometimes divides a single original image into a plurality of segments and sends them in the form of a plurality of electronic mails. If the communication terminal device on the receiving side does not receive one or more electronic mails, it detects which electronic mail(s) is (are) missing. Then, the communication terminal device prepares information about failed transmission including the missing electronic mail number and the associated original image segment number, dials the facsimile number of the sender's device, and transmits the missing mail information in the form of image data to the sender's terminal. Thus, information regarding undelivered mail is not lost over the network, and is transmitted reliably to the sender.

The communication terminal device on the receiving side may also include a second determination means for determining a fact that the electronic mail has been successfully received, a second image generating means for generating second image data indicating that mail has been successfully received, a second dialing means for dialing a telephone number of the sender's device, and a second transmission means for transmitting the second image data to the sender's device dialed by the second dialing means. Information about succeeded mail transmission is reliably transmitted to the sender via a public telephone line.
- FIG.1: is a block diagram of the communication terminal device (facsimile machine) of the present invention.
- FIG.2: is a flow chart showing the operation of the communication terminal device of the present invention during data transmission.
- FIG.3: is a flow chart showing the operation of the communication terminal device of the present invention during data reception.

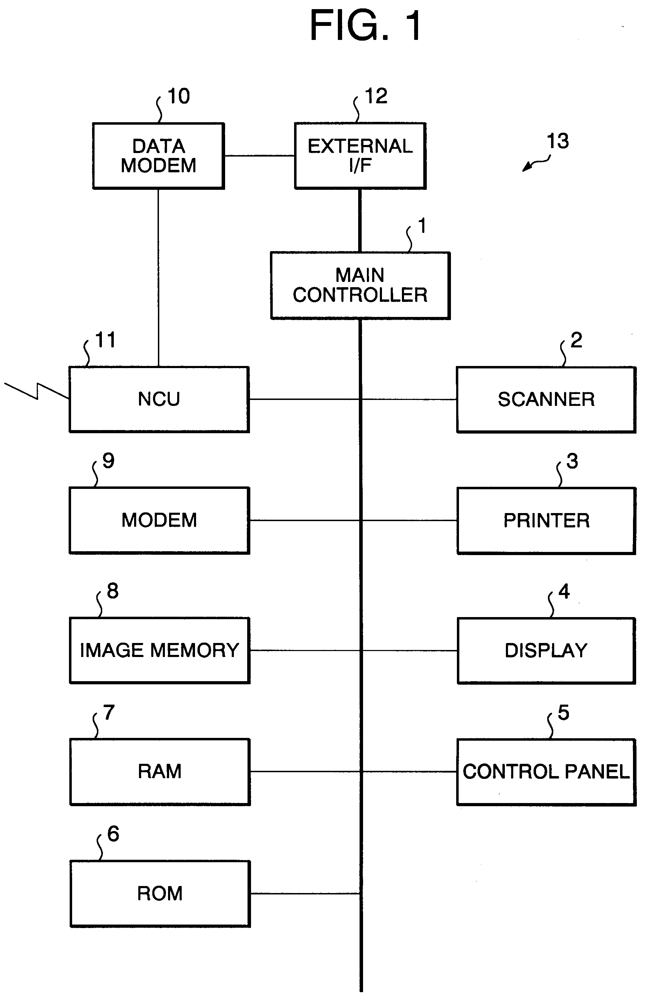

Referring to FIG. 1, illustrated is a block diagram showing the structure of the electronic mail-capable communication terminal device (facsimile machine) 13 of the present invention. In this particular embodiment, the facsimile machine 13 utilizes the Internet as a communications network. The illustrated facsimile machine 13 can be used as a data sending device and a data receiving device.

The facsimile machine 13 includes CPU 1 that controls not only the various hardware elements of the facsimile machine 13 over buses, but also executes communication procedures based on software stored in ROM 6 which include encoding and decoding image data according to coding schemes such as MH, MR, MMR, etc., converting the coded image data to and from TIFF format, and then to and from binary text format, editing the electronic mail, switching the modems, and controlling the RS232C line by using AT commands.

When electronic mail is transmitted, CPU 1, as described below, generates image data for electronic mail transmission notification including such information as the number of electronic mails sent, and a mail transmission message. Then, either before or after transmission of the electronic mail, CPU 1 dials the telephone number (facsimile number) of the electronic mail recipient's facsimile machine, and transmits the transmission notification image data directly to the facsimile machine (i.e. not over the Internet). The transmission notification image data may be output from a printer of a recipient's device.

Further, when at least one electronic mail is received, CPU 1, as described below, detects any non-received electronic mails by referencing the header information contained in the received electronic mail. The header information shows whether or not a single original image (original document) is divided into a plurality of segments on the sending side before transmitted to a recipient, and which mail is the first (or second or third or ...) mail Thus, by analyzing the header information, it is possible for the facsimile machine 13 on the receiving side to know how many electronic mails should be delivered thereto, and which electronic mails are received and which are not. CPU 1 then generates image data of reception notification that indicates which electronic mail(s) is (are) missing or that all the mails are successfully received. The header information carried by the electronic mail also provides a log-in ID, a facsimile number and the like of the sending device. The facsimile machine 13 on the receiving side may also have information about the sending device stored already in RAM 7 which also provides a log-in ID, a facsimile number and the like of the sending device. The information about the sender's device is obtained by electronic mail sent from the sender's device in the latter case. By referring to such information, CPU 1 can know a facsimile number of a sender's facsimile machine, and it dials the sender's facsimile number and transmits the reception notification (image data) to the sender by way of facsimile communication (not over the Internet).

The information about a fact whether or not the single original image is segmented on the sending side before transmission and transmitted in the form of a plurality of electronic mails in the particular order is placed in, for example, in the "Subject" field of the header information of the electronic mail. The facsimile machine 13 on the receiving side reads the "Subject" field to retrieve this information.

For instance, the "Subject" field has four subfields and each field is delimited by a semicolon (";"). This format may be specified such that the first subfield may contain sender information such as the sender's log-in ID, the second subfield may contain a job number in order to determine whether the electronic mail received should be handled by a single file, the third subfield may contain the mail number (first mail or second mail or third mail or ...: XXX) and total number of electronic mails sent (YYY) in the form of PXXX/YYY, and the fourth subfield may contain segment or block number (XX) and the total block number (YY) in the form of BXX/YY if a single original image is divided into a plurality of segments or blocks.

A communication terminal device for dividing a single original image into a plurality of segments and send them in the form of a plurality of electronic mails to a recipient is disclosed in Japanese Patent Application No. 9-130170 filed May 20, 1997 and a corresponding U.S. Patent Application Serial No. ************ entitled "COMMUNICATIONS TERMINAL DEVICE WITH ELECTRONIC MAIL FUNCTION" filed May 13, 1998 claiming the priority of the above-identified Japanese application (Attorney Docket No. 6332D-6664), and the entire disclosures of these Japanese and U.S. Patent Applications are incorporated herein by reference.

In image format conversion, when electronic mail image data is transmitted, the G3-formatted image data is converted into a TIFF (Tagged Image File Format) image data which can be used by common computers. When image data is received, the image is converted back from TIFF to G3 format. TIFF format has been made public by Adobe Systems, Inc., and treatment of various classes of image data has been specified including not just binary black-and-white data, but also gray-scale and full-color. One of these classes, class F, defines the conversion of MH, MR, MMR, etc., encoded G3-type image data. Consequentially, TIFF conversion is made by appending Class F TIFF header information to the top of the G3 image data.

In binary text conversion, binary data is converted to text data when electronic mail image data is transmitted, and text data is converted to binary image data when electronic mail image data is received. Since some computers on the Internet cannot handle binary image data, when binary TIFF image data is sent over the Internet, it must first be converted to text data in order for it to be reliably received by the recipient. The text data format for use over the Internet has been specified as 7-bit code in RFC (Request For Comments) 822 published by the Internet Engineering Task Force (IETF).

RFC 822 and 1341 disclose how to use MIME (Multipurpose Internet Mail Extensions) base 64 to convert between binary and text data. According to this method, each one of 64 individual characters (capital letters, lower case letters, numbers, and "+" and "/") is assigned to one value of the 6-bit binary data set for conversion to text data.

In mail editing, when electronic mail image data is sent, CPU 1 appends electronic mail header information to the text-formatted TIFF image data enabling it to be sent as electronic mail. When electronic mail image data is received, CPU 1 removes the electronic mail header information from the electronic mail data, and extracts the text data-formatted TIFF image data. Since certain information is included in the header of Internet electronic mail for administrative purposes, CPU 1 appends "From: (the sender's electronic mail address)," "To: (the recipient's electronic mail address)," and "Subject: (title of the mail or subject information)" to the top of the TIFF image data.

A scanner 2 of the facsimile machine 13 scans an original image (original document) with an image scanner like a CCD and outputs binary black-and-white image data. A printer 3 is provided with an electrophotographic printer and outputs image data received from other G3 facsimile machines or received over the Internet, transmission notification image data received from a communication terminal device sending the electronic mail (if the illustrated facsimile machine 13 is a data receiving device), and reception notification image data received from a communication terminal device receiving the electronic mail (if the facsimile machine 13 is a data sending device). The reception notification provides information about successful reception or missing electronic mail(s). The printer 2 outputs such image data at either normal size or reduced/enlarged size according to the size of the recording sheet. A display unit 4 is provided with an LCD device, and displays the operating status of the facsimile machine 13 and image data.

A control panel 5 contains a number pad (numeric keys), speed-dial keys, one-touch dialing keys and various other function keys required to operate the facsimile machine 13. ROM 6 stores software required to operate the facsimile machine 13. RAM 7, comprised of SRAM, flash-memory or the like, temporarily stores data generated during execution of the software.

In the present embodiment, RAM 7 is provided with a table containing the facsimile (telephone) numbers corresponding to the electronic mail addresses of the recipients if the facsimile machine 13 is used as a data sending device. If the facsimile machine 13 is used as a data receiving device, RAM 7 is provided with a table containing the log-in ID and facsimile number of the sender of electronic mail obtained from the electronic mail received from the sending communication terminal device.

Further, when the facsimile machine 13 is used as the data sending device, RAM 7 is also provided with a table to determine whether or not the facsimile machine 13 requests the receiving device to send back reception notification (whether reception notification request mode is ON or OFF). The receipt notification includes information about missing electronic mails or successful mail reception. Requesting the reception notification or not is indicated in the header information of the electronic mail transmitted to the receiving device.

An image memory 8 is comprised of DRAM or the like, and stores image data. A modem 9 is a modem for normal facsimile communication of image data scanned in by scanner 2, and is not provided with data communication capabilities. A data modem 10 is a modem for communication of image data converted to electronic mail for transmission or reception via the Internet. The data modem 10 is connected via a telephone cable to, for example, an external telephone terminal provided on a chip inside NCU 11, and via an RS232C line to the serial port of an external I/F 12 s for connection to a personal computer. NCU 11 opens and closes an analog telephone circuit.

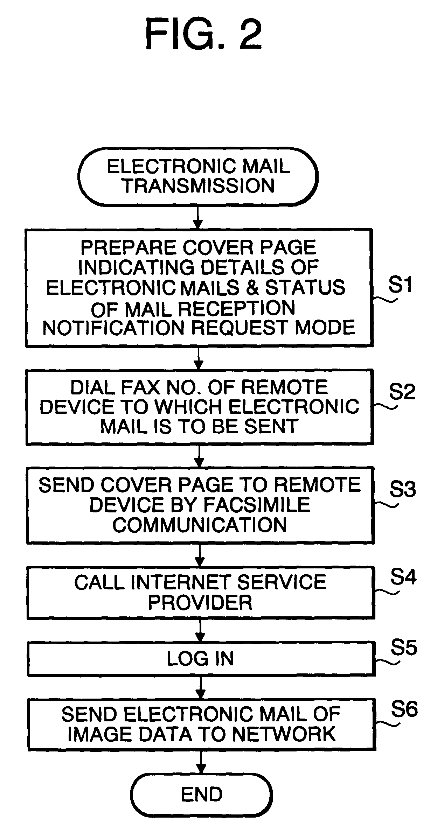

Next, the operation of the facsimile machine 13 when it transmits data to a remote device is described based on the flow chart shown in FIG. 2.

A cover page indicating details of the transmitted electronic mails (information concerning the number of electronic mails, whether a single original image is divided into a plurality of segments, etc.), NO or OFF status of a mail receipt notification request mode and the like is generated as image data (Step S1). The table in RAM 7 is referenced and the telephone number (facsimile number) of the mail receiving device is dialed via a public telephone (PSTN) line (Step S2). The cover page image data is then transmitted by way of facsimile communication to the remote facsimile machine that is dialed (Step S3). The telephone number of the Internet Service Provider (ISP) is then dialed to log into the network (Steps S4 and S5), and the electronic mail derived from an original image (original document scanned) is transmitted to the network (Step S6).

It is also possible to have the cover page created after the mail has been sent.

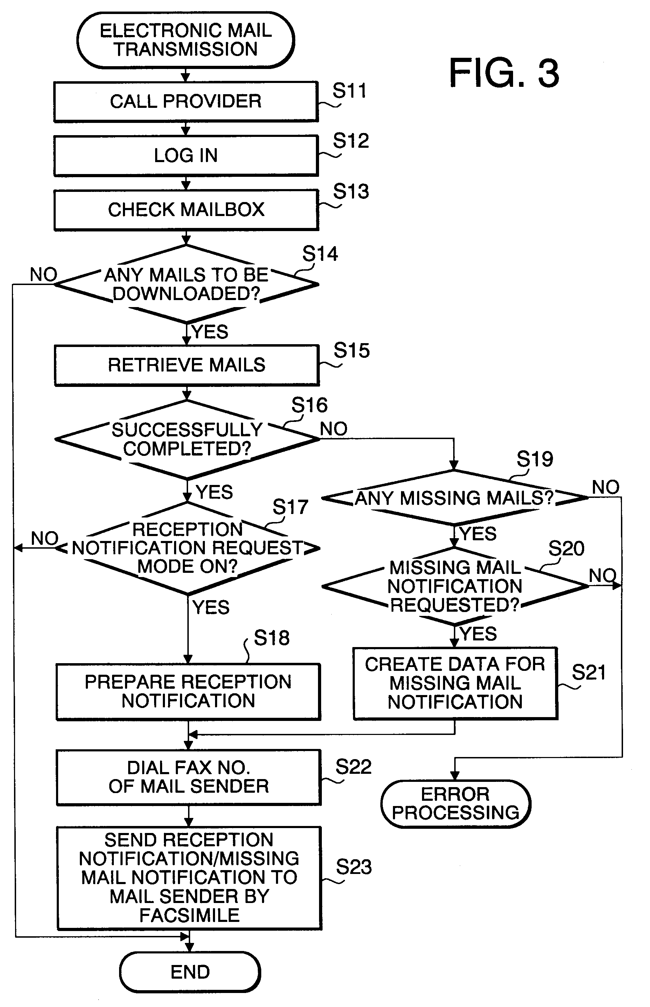

Next, operation of the communication terminal device 13 when it receives data will be described based on the flow chart shown in FIG. 3.

Either after transmission notification as described above has been received, or when dialing in and logging into a provider at a scheduled interval (Steps S11 and S12), the user mailbox is checked (Step S13). It is then determined whether or not there are any electronic mails to be downloaded (Step S14). If there are no electronic mails to be downloaded, the program ends, but if there are electronic mails to be downed, they are retrieved from the provider (Step S15).

CPU 1 then checks for information regarding whether the original image has been divided into a plurality of segments before transmission and they are transmitted by a plurality of electronic mails. It is then determined if all the electronic mails have been received successfully (Step S16). If so, the header information of the electronic mail received is checked to determine whether the receipt notification request mode is "ON" or "OFF" (Step S17).

If there is no request for receipt confirmation, the program ends, but if there is such a request, receipt confirmation image data is generated (Step S18).

If it is determined at Step S16 that all the electronic mails have not been downloaded successfully, CPU 1 determines whether there are any missing electronic mails (Step S19). If the download failure is caused by something other than missing electronic mails, CPU 1 executes a standard system error procedure. If the reason for the download failure is missing mails, however, CPU 1 references the header information of the received mail, and determines whether a missing mail notification is requested or not (missing mail notification mode is "ON" or "OFF") (Step S20).

If there is no missing mail notification request, CPU 1 simply executes a predetermined error procedure for missing mails, but if sending back of a missing mail notification is requested, the missing mail notification image data is created (Step S21).

The facsimile machine 13 then references the header information of the electronic mail or the table in RAM 7 to obtain the facsimile number of the mail sender and makes a call to the sender (Step S22). The receipt notification image data or the mail missing notification image data is then sent over the PTSN line and transmitted to the sender by facsimile communication (Step S23).

## Claims

1. A communication terminal device (13) with an electronic mail communication function, including means (1, 10, 11) for transmitting electronic mail to an intended recipient, characterized in that the communication terminal device (13) further includes:
data creating means (1) for creating data concerning mail transmission to an intended recipient;
dialing means (1) for dialing a facsimile number of a device of an intended electronic mail recipient; and
transmission means (1) for transmitting the data created by the data creating means to the recipient's device dialed by the dialing means by way of facsimile transmission.

2. An electronic mail-capable communication terminal device (13) adapted to receive electronic mail and notification of transmission of electronic mail from a sender's device, comprising:
determination means (1) for determining if any mail is not received;
data creating means (1) for creating data indicating that electronic mail has not been received;
dialing means (1) for dialing a facsimile number of a sender's device if any mail is not received; and
transmission means (1) for transmitting the data created by the data creating means to the sender's device that is dialed by the dialing means by way of facsimile transmission.

3. An electronic mail-capable communication terminal device (13) comprising:
determination means for determining whether or not electronic mail to be received has been successfully received;
data creating means for creating data indicating that electronic mail has been successfully received;
dialing means for dialing a facsimile number of an electronic mail sender's device; and
transmission means for transmitting the created data to the sender's device dialed by the dialing means by way of facsimile transmission.

4. A communication terminal device (13) with an electronic mail communication function of claim 1, 2 or 3, characterized in that the communication terminal device (13) further includes inclusion means (1) for including information about division of a single original image into a plurality of segments carried out on a sending side, in a header information of the electronic mail.

5. A communication terminal device (13) with an electronic mail communication function of any one of claims 1 to 4, characterized in that the communication terminal device (13) further includes inclusion means (1) for including information indicating a receipt confirmation request in a header information of the electronic mail.

6. A communication terminal device (13) with an electronic mail communication function of any one of claims 1 to 5, characterized in that the transmission means transmits the data through PSTN.

7. A communication terminal device (13) with an electronic mail communication function of any one of claims 1 to 6, characterized in that the data is image data.

8. A communication terminal device (13) with an electronic mail communication function of any one of claims 1 to 7, characterized in that the data is created before or after electronic mail transmission.

9. An electronic mail-capable communication terminal device (13) of claim 2 or 3, characterized in that the determination means makes determination based upon information contained in an electronic mail header concerning division of a single original image into a plurality of segments carried out on a sending side.

10. An electronic mail-capable communication terminal device (13) of any one of claims 2 or 9, characterized in that if a receipt confirmation request is included in a header of an electronic mail received, the transmission means transmits the data to a sender's device.

11. An electronic mail-capable communication terminal device (13) of claim 2, 6, 7, 9 or 10, characterized in that the communication terminal device further includes printing means (3) for printing the notification of transmission of electronic mail sent from a sender's device.

12. An electronic mail-capable communication terminal device (13) of claim 11, characterized in that the printing means (3) prints the notification of transmission of electronic mail in a size conforming to a recording sheet set in the electronic mail-capable communication terminal device.

13. An electronic mail-capable communication terminal device (13) of claim 2, 6, 7, 9, 10, 11 or 12, characterized in that the communication terminal device further includes means (4) for displaying the notification of transmission of electronic mail sent from a sender's device.

14. An electronic mail-capable communication terminal device (13) of any one of foregoing claims, characterized in that the communication terminal device further includes printing means (3) for printing the created data.

15. An electronic mail-capable communication terminal device (13) of claim 14, characterized in that the printing means (3) enlarges or reduces the data before printing in accordance with a recording sheet prepared.

16. An electronic mail-capable communication terminal device of any one of foregoing claims, characterized in that the communication terminal device further includes means (4) for displaying the created data.

17. An electronic mail communication method comprising the steps of:
A) creating data about mail transmission to an intended recipient;
B) dialing a facsimile number of a device of an intended electronic mail recipient; and
C) transmitting the data created in the step A to the intended recipient's device by way of facsimile transmission.

18. An electronic mail communication method comprising the steps of:
A) logging-in to a network to determine if there is missing mail;
B) creating data indicating that there is missing mail if it is determined at the step A that there is missing mail;
C) dialing a facsimile number of a sender's device; and
D) transmitting the data created in the step B to the sender of the missing electronic mail via facsimile communication.

19. An electronic mail communication method comprised of the steps of:
A) logging-into a network to determine if mail to be received has been successfully received;
B) creating data indicating that the mail has been received successfully; C) dialing a facsimile number of an electronic mail sender's
device; and
D) transmitting the data created in the step B to the sender's device via facsimile communication.

20. An electronic mail communication method of claim 17 characterized in that the electronic mail communication method further comprises the step D of sending electronic mail to an intended recipient before or after the step A.

21. An electronic mail communication method of claim 20 characterized in that the electronic mail communication method further comprises the step of including in the electronic mail information about division of a single original image into a plurality of segments carried out on a sending side if it is the case before the step D.

22. An electronic mail communication method of claim 20 or 21, characterized in that the electronic mail communication method further comprises the step of including in the electronic mail a request to send back information about receipt of the electronic mail before the step D.

23. An electronic mail communication method of any one of claims 18 to 22, characterized in that the data transmission in step D is carried out using PSTN.

24. An electronic mail communication method of any one of claims 17 to 23, characterized in that the data is image data.

25. An electronic mail communication method of claim 18 or 19, characterized in that whether or not there is missing mail is determined at the step A based upon information contained in an electronic mail header concerning division of a single original image into a plurality of segments carried out on a sending side.

26. An electronic mail communication method of claim 18, 19, 23 or 25, characterized in that the step D transmits the data to the sender's device if a receipt confirmation request is included in an electronic mail received.

27. An electronic mail communication method of claim 18, 19, 23, 24, 25 or 26, characterized in that the electronic mail communication method further includes the step of printing the data created in the step B.

28. An electronic mail communication method of claim 27, characterized in that the printing step is carried out such that the data is enlarged or reduced according to a recording sheet prepared.

29. An electronic mail communication method of claim 18, 19, 23, 24, 25, 26, 27 or 28, characterized in that the electronic mail communication method further includes the step of displaying the data created in the step B.
